# EUROPEAN PATENT APPLICATION

(11) **EP 4 786 209 A1**
(43) Date of publication of application: **05.08.2026**
(21) Application number: 26155450.5
(22) Date of filing: 30.01.2026
(51) Int. Cl.: B60C 5/00, B60C 7/10

(54) **EXPANDED ELASTOMERIC MODULE FOR FILLING A MOTORCYCLE TYRE, ASSEMBLY COMPRISING A PLURALITY OF SUCH MODULES AND A TYRE**

(30) Priority: 30.01.2025 IT 202500001704
(71) Applicant: MrWolf S.r.l., 25036 Palazzolo sull'Oglio (BS) (IT)
(72) Inventor: Oldrati, Manuel, 24060 Villongo (BS) (IT)
(74) Representative: Autuori & Partners S.R.L.

(57) **Abstract**

A module **(2)** which can be used with a plurality of other modules for obtaining an annular modular filling element **(1)** adapted to fill a tyre of a cycle or motorcycle designed to be fitted on the rim of a wheel. The module **(2)** can be removably inserted into the tyre. The module **(2)** has an outer surface **(9')** designed to directly come into contact with the tyre and other modules. The module comprises a body **(2')** and a surface coating layer **(9).** The latter comprising the outer surface **(9').** The surface coating layer **(9)** is an anti-friction layer.

## Description

### Technical field

The present invention generally relates to the technical field of accessories for cycles and motorcycles, and it particularly relates to a module for filling a tyre of a cycle or motorcycle.

### State of the Art

In motorcycling or cycling sports activities, both competitive and amateur, on uneven grounds or non-asphalted grounds in any case is suitable to fill the internal of the tyres of the cycle or motorcycle with a filling element.

This increases the protection of the tyre against punctures and the pinches for example with respect to the classic air chambers. On the other hand, the filling element increases the performance of the tyre in terms of damping against impact, raises the grip of the tyre on various types of grounds and, more generally, it improves the driving/riding comfort and the feeling of the rider.

A prior art filling element consists of a plurality of substantially oval-shaped modules designed to be inserted into the tyre of a motorcycle. Such modular filling element allows a high versatility of use allowing an easy maintenance and adjustment.

However, such filling element is complex to fit on the tyre.

Document EP4271578 discloses a module, for forming a filling element designed to be positioned into a tyre of a wheel made of elastomeric material with a particular toroidal shape. However, the operations for inserting/removing the modules into/from the tyre are long, complex and dirtying.

### Summary of the invention

An object of the present invention is to at least partly overcome the drawbacks illustrated above by providing a module which can be inserted into a tyre of a cycle or motorcycle that is highly efficient and cost-effective.

A further object of the present invention is to provide a module which can be inserted into a tyre of a cycle or motorcycle that is easy and quick to insert and/or remove into/from the tyre.

A further object of the present invention is to provide a module which can be inserted into a tyre of a cycle or motorcycle which can be inserted into the tyre without dirtying.

A further object of the present invention is to provide a module which can be inserted into a tyre of a cycle or motorcycle which can be inserted and used into the tyre without requiring anti-friction elements such as lubricant gels, talc, sleeves or the like.

Another object of the present invention is to provide a method for providing of a module for making an annular modular filling element of a tyre of a cycle or motorcycle that is highly efficient and cost-effective.

These and other objects which will be more apparent hereinafter, are attained by a module for forming a modular filling element of a tyre of a cycle or motorcycle and/or by an assembly comprising such module and/or by a method for providing a module as described, illustrated and/or claimed herein.

The dependent claims define advantageous embodiments of the invention.

The module may be suitable to be used with a plurality of other modules for obtaining an annular modular filling element adapted to fill a tyre of a cycle or motorcycle, the tyre being designed to be fitted on the rim of a wheel, the module being suitable to be removably inserted into the tyre.

The module may have an outer surface designed to directly come into contact with the tyre and other modules. The module comprises a body and a surface coating layer of said body which comprises the outer surface of the module.

The surface coating layer is an anti-friction layer.

Thanks to this characteristic, the outer surface has a low coefficient of friction with the tyre and with the other modules.

In this manner, there is no need for using anti-friction elements such as lubricant gels, talc, sleeves or the like. The module may come into direct contact with the tyre or with the other modules of the annular modular filling element.

Advantageously, the module may be inserted/removed into/from a tyre in a simple and quick manner and without dirtying. Advantageously, the module may be easily inserted, removed or replaced by the rider allowing to use it even for uses under harsh conditions such as off-road racing, endurance racing or the like.

The invention may regard a method for providing a plurality of modules for obtaining an annular modular filling element adapted to fill a tyre of a cycle or motorcycle, the tyre being designed to be fitted on the rim of a wheel, the modules having an outer surface designed to directly come into contact with the tyre and other modules once inserted into the tyre.

In particular, the method may comprise the steps for providing a plurality of bodies made of expanded elastomeric material and a step of treating the bodies to obtain on each an anti-friction surface coating layer so that the outer surface of the module has a low coefficient of friction with the tyre and the other modules.

This characteristic may allow to obtain the advantages reported above.

Preferably, the anti-friction layer may be obtained by means of molykote treatment and the layer may consist of molybdenum disulphide.

This characteristic may allow to quickly form an even anti-friction layer with low thickness.

The invention may further relate to an assembly which comprises a tyre of a cycle or motorcycle designed to be fitted on the rim of a wheel and an annular modular filling element which can be positioned inside of the tyre. The annular modular filling element consists of a plurality of modules with anti-friction surface coating.

This may allow to avoid the use of anti-friction elements such as lubricants or talc or sleeves. This characteristic may allow to obtain the advantages reported above. Advantageously, as a matter of fact, the module may be inserted/removed into/from a tyre in a simple and quick manner and without dirtying, possibly also by the rider in question.

### Brief description of the drawings

Further characteristics and advantages of the invention will be more apparent in light of the detailed description of a preferred but non-exclusive embodiment of the invention, illustrated by way of non-limiting example with reference to the attached drawings, wherein:
**FIG. 1** is an axonometric view of an embodiment of a filling element **1** of a tyre of a motorcycle with a plurality of modules **2** in contact with each other;
**FIGS. 2** and **3** are respectively lateral and front views of the modular filling element **1** of FIG. 1;
**FIG. 4** is a front view of another embodiment of the modular filling element **1** in which the modules **2** are separated from each other;
**FIGS. 5, 6** are an axonometric and front view of an embodiment of a module **2,** with **FIG. 7** showing a cross-sectional view of FIG. 6 in which there is schematically shown the main body **2'** and the anti-friction layer **9;**
**FIG. 8** is a front view of another embodiment of a module **2;**
**FIG. 9** is a front view of a further embodiment of a module **2;**
**FIG. 10** is a front view of a further embodiment of a module **2.**

### Detailed description of some preferred embodiments

With reference to the attached figures, herein described is a filling element **1** adapted to fill a tyre of a cycle or motorcycle, for example a mountain bike or motocross motorcycle.

In a per se known manner, the tyre is fitted on the rim of a wheel of the cycle or motorcycle. Given that it is per se known, the tyre and the rim or motorcycle were not shown in the attached figures.

By way of non-limiting example, the present invention may be particularly useful for cycling or motorcycling sports on rough roads, for example mountain bike or motorcross bike. On the other hand, it is clear that the present invention may be used in any situation in which the cyclist or motorcyclist deems the use thereof suitable, without particular restrictions.

However, by its nature, the use of the present invention is limited to cycling, motorcycling or applications in which the stresses on the tyre are substantially similar. It is therefore clear that the present invention may not be used for filling a motor vehicle, a tractor or similar means.

Preferably, the filling element **1** may be particularly adapted for use in wheels of a motorcycle, preferably motorcross or endurance motorcycle.

The filling element **1** may comprise a plurality of modules **2.** In other words, the filling element may consist of a modular assembly. The filling element **1** may therefore be a modular filling element.

Preferably, the filling element consists of a plurality of identical modules **2,** that is identical to each other.

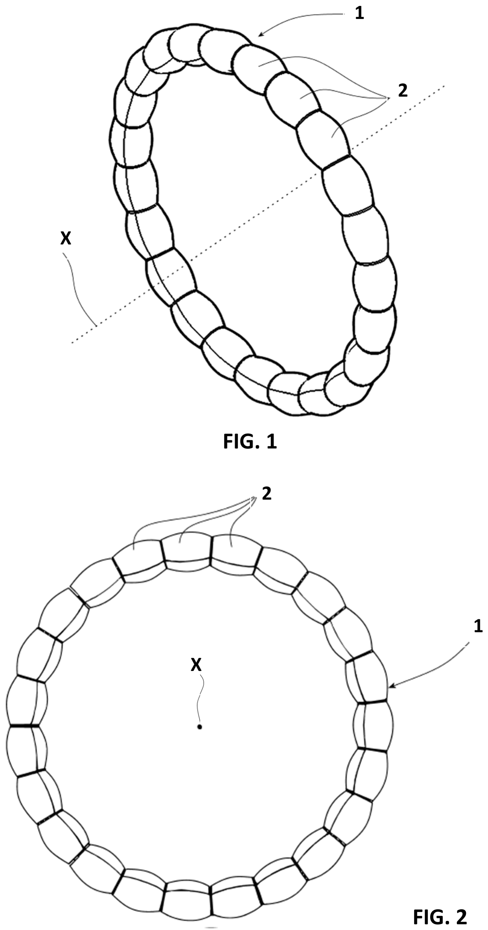

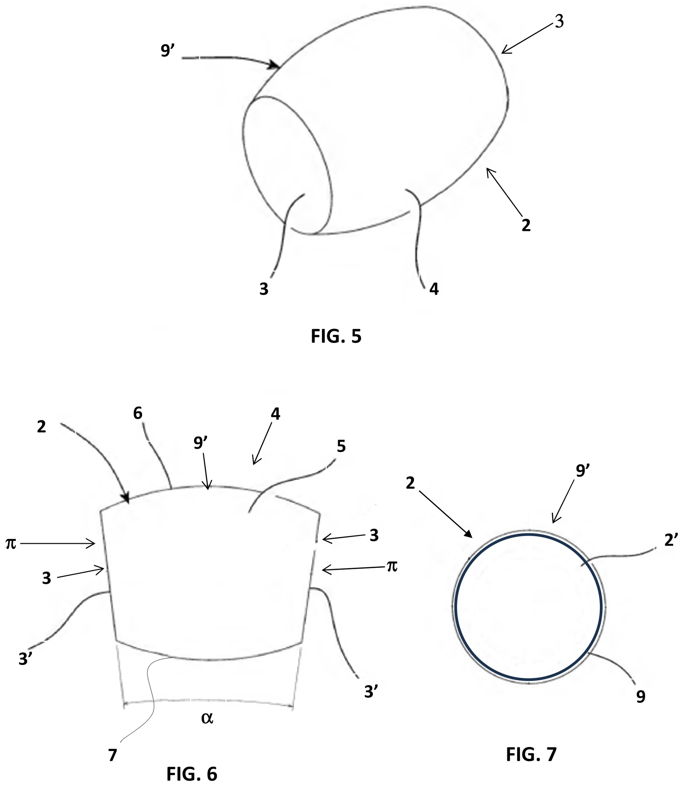

Such embodiment is for example shown in FIG. 1 to FIG. 4. It is clear that such modular assembly may comprise modules **2** shaped differently, for example as shown in FIG. 5, FIG. 8 and FIG. 9.

The modules **2** may be removably inserted into the tyre, preferably arranged adjacent to each other so as to cover the entire circumferential extension of the tyre.

Suitably, depending on the number of modules **2** used and the size of the wheel, once inserted into the tyre, the modules **2** may be in contact, slightly spaced apart or precompressed.

More in particular, once inserted into the tyre, the modules **2** may be in contact with each other, for example as shown in FIGS. 1 - 3, so as to cover the entire circumference of the tyre.

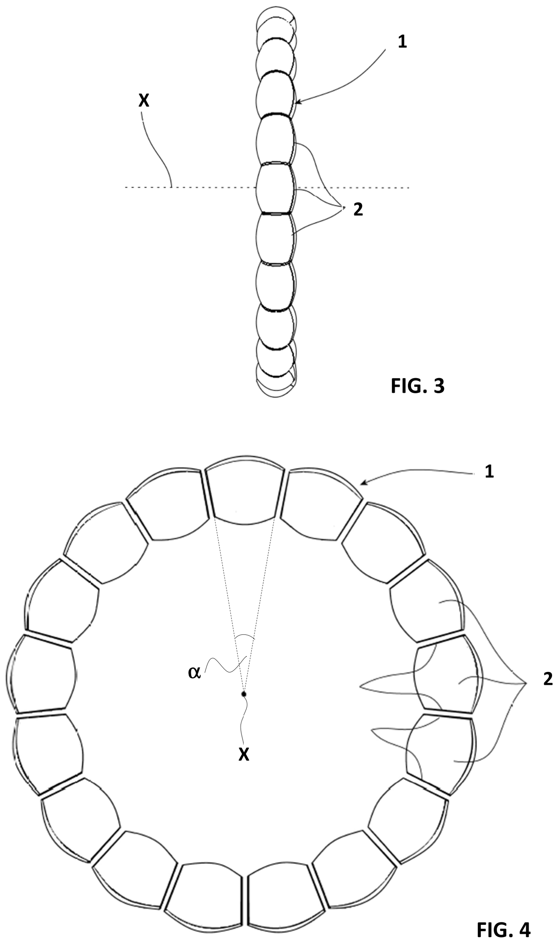

On the other hand, the modules **2** may be spaced from each other, for example as shown in FIG. 4, for example by a distance of 1 mm - 10 mm. It is clear that FIG. 4 shows an embodiment or the annular modular assembly **1** which includes a smaller number of modules **2** with respect to that of FIGS. 1 - 3. However, even when they are spaced apart, when using the cycle or motorcycle, the modules **2** will tend to deform under load, due to the stresses to which they are subjected and the resulting thermal expansion, so they may come into mutual contact in any case.

It is clear that the use of a number of modules **2** greater than the one required to cover the entire length of the circumference (for example FIG. 2) will cause the pre-compression of the modules **2 .** As a result, there may be a greater mechanical rigidity of the assembly **1.**

Basically, each module **2** of the annular modular assembly **1** will define a portion or section of the latter.

The configuration of the modules **2** may be such that once inserted into the tyre, all the internal volume of the latter may be filled, without empty spaces.

Suitably, each module **2** may have an outer surface **9'.** Preferably, in use, the outer surface **9'** may come into contact with the tyre and/or the rim and/or with other modules, that is with the outer surface of other modules.

It is clear that during the use of the entire outer surface **9'** is not necessarily always in contact with the tyre, the rim, and the adjacent modules.

Each module **2** may comprise a respective body **2'.** The shape and material of such body **2'** will be better described below.

As regards the material with which the body **2'** is made, such material may be expanded elastomeric material, preferably with closed cells, for example butyl rubber or EVA.

By way of example, the expanded elastomeric material may have a density comprised between 0.05 gr/cm³ and 0.8 gr/cm³, for example measured according to the ASTM D297 standard, or a density comprised between 0.05 gr/cm³ and 1 gr/cm³, for example measured according to the SO 845 standard.

A possible composition of the material may be:
- basic elastomer: 30% - 70% by weight;
- black fillers: 10% - 30% by weight;
- white fillers: 0% - 10 % by weight;
- plasticisers: 2% - 20% by weight;
- foaming agents (chemical and/or physical): 3% - 10% by weight.

Preferably, the body **2'** may be made of expanded elastomeric material comprising butyl rubber. In this case, the basic elastomer of the composition mentioned above may be butyl rubber.

All the components mentioned above may be of the per se known type for the person skilled in the art. For example, the basic elastomer may be IIR, BIIR or CIIR. The black fillers may possibly consist of carbon black, while the white fillers, which may be reinforcing and non-reinforcing, may for example be silica and/or kaolin.

The body **2'** may be obtained by vulcanisation, for example with sulphur or peroxide.

Such expanded elastomeric material described above is highly compressible and elastic, so as to absorb impacts and deformations in an excellent manner with clear advantages with regard to the mechanical behaviour of the body **2'** and, as a result, of the filling element **1.**

On the other hand, such expanded material has a microporous surface which significantly complicates the carrying out of an anti-friction surface treatment of the per se known type thereon. As a matter of fact, the body **2'** may have a microporous surface, socalled "closed cell skin". In this case, a surface treatment of the known type which uses the deposition of material (powder or cross-linking liquids) would not be effective in providing a continuous anti-friction layer.

Advantageously, the module **2** may comprise the body **2'** made of expanded elastomeric material and at least one anti-friction coating layer **9.** Preferably the module **2** may consist of the body **2'** made of expanded elastomeric material and an anti-friction coating layer **9.** The layer **9** may cover the entire body **2'.**

The layer **9** may be continuous and effective as a result. Such aspect can be macroscopically observed by the fact that the static coefficient of friction is particularly low, as better shown in TAB. 1 below.

The layer **9** may comprise the outer surface **9'** of the module **2.** Preferably, the layer **9** may include the outer surface **9'.** In other words, the outer surface of the layer **9** may define the outer surface **9'** of the module **2.**

Thanks to the layer **9,** the outer surface **9'** of the module **2** may have a low friction with the tyre, preferably a low friction also with the outer surfaces of other modules **2.**

Thanks to the outer surface **9',** the low friction may also allow to insert the modules **2** into the tyre without using anti-friction elements such as lubricant gels, talc, sleeves or the like, and at the same time maintain the mechanical *performance* of the filling element **1.**

Furthermore, thanks to this characteristic, the modules **2** may come into direct contact with the tyre, that is without requiring gel or talc or sleeves interposed between the module and the tyre. In this manner, there is no need to modify a commercial tyre or to provide sleeves, lubricants or other anti-friction elements. In greater detail, the outer surface 9' of the modules **2** may come into direct contact with the tyre, as better explained below.

Advantageously, the operation for inserting, removing and/or replacing one or more modules **2** may be particularly simple. Furthermore, this may still advantageously allow to avoid dirtying the environment and/or the user when inserting, removing and/or replacing one or more modules **2.**

Advantageously, this may allow to prevent a user from inserting the modules **2** into the tyre incorrectly, that is with an excessive or scarce amount of lubricating gel or talc, that jeopardises the reliability and performance thereof. Such aspect is more significant should the filling element **1** consist of a plurality of modules **2.**

FIG. 7 is a cross-section of the module **2** which schematically shows the main body **2'** and the anti-friction layer **9.** It is clear that such cross-section is provided solely by way of example given that the anti-friction layer **9** may have a much smaller thickness than the thickness of the module **2.** For example, the anti-friction layer **9** may have a thickness in the order of microns.

The module **2** comprising the layer **9,** may be obtained by providing the body **2'** and a subsequent treatment thereof to form the anti-friction coating layer **9.**

Advantageously, there may be firstly provided the body **2'** made of expanded elastomeric material in a per se known manner, and subsequently the body **2'** may be treated superficially. Possibly, such surface treatment may be obtained at different times and places with respect to the step for providing the body **2',** with advantages in terms of production costs.

The surface treatment may comprise or consist of a treatment of the spray, centrifuge or submersion type. Possibly, the treatment may comprise a combination of two or more of the spray, centrifuge and submersion treatments.

The treatments may be obtained with liquid substances based on silicone or fluorinated polymers, or using powders or "extra fine" organic or inorganic fibres, such as for example: talc, molybdenum disulfide, carbonates, corn starch. Preferably, the surface treatment may be a molykote or silicone coating treatment.

In any case, the module **2** which comprise the layer **9** may have the outer surface **9'** with a resistance to friction that is particularly low so as to allow prevent the use of anti-friction elements such as lubricant gels, talc or sleeves.

According to a preferred but non-exclusive embodiment, the modules **2** may be obtained by means of a molykote treatment.

Advantageously, the molykote treatment may allow to form such continuous and even layer.

The molykote treatment may be of the semi-permanent type and it may be based on the use of ultra-fine molybdenum disulphide powder.

The treatment may provide for a container within which there are arranged the bodies **2'** and molybdenum disulphide. The bodies **2'** may be suitable to be displaced in the container.

In this manner, advantageously, the continuous impacts between the bodies **2'** will promote the partial penetration of molybdenum disulfide powder on the porous surfaces of the bodies **2'**

This process will allow to generate the interaction forces of the mechanical type which allow the material to penetrate and adhere in the surface micro-roughness. Furthermore, this may allow to generate a force of the electrostatic type (such as the Van der Waals force), which allows to bind the powders to the components with a greater electrostatic attraction force (for example, black smoke).

In this manner, the molybdenum disulfide powder may form a continuous layer which may define the anti-friction layer **9.**

The filling element **1** may be cost-effective to obtain given that the individual modules **2** may be obtained quickly and cost-effectively by means of equipment that is small in size, as described in the examples below.

The filling element **1** may have a mechanical rigidity that is desired and variable in a simple manner, given that the overall mechanical strength of the assembly **1** may be varied by varying the number of modules **2** inserted into the tyre.

The filling element **1** may allow a high ease of installation given that the modules **2** with the anti-friction layer **9** may be easy to insert/remove into/from the tyre.

Such aspect also makes the operations for replacing the modules **2** particularly simple and quick.

The modules **2** tend to overheat in a limited manner during use due to the greater overall surface extension.

The use of modules **2** is particularly cost-effective in the event of damaging or breakage, given that in this case one can change the one or more damaged or broken modules **2** and one does not have to change the whole filling element.

Described hereinafter are some examples of treatments for forming the anti-friction layer **9** obtained on a plurality of bodies **2'.**

The molykote treatment may provide for the use of a rotary barrel preferably operating at a constant rotary speed.

The rotary barrel may be loaded with a number of bodies **2'** comprised between 200 - 350 bodies **2'** depending on the size of the bodies in question and the volume of the machine used.

This may allow to ensure an optimal movement of the bodies **2'** to allow an even distribution of the coating.

For example, the load of the rotary barrel may be about 200-250 bodies having a volume comprised between 300 cm³ and 800 cm³, preferably between 320 cm³ and 720 cm³.

The duration of the molykote treatment cycle may vary between 15 and 25 minutes, depending on the number of bodies **2'** present in the rotary barrel.

Should there be used a number of bodies **2'** greater than 350, the molykote treatment cycle may have a greater duration, for example 30-40 minutes, to ensure an even application of the coating material.

The coating material used in the molykote treatment cycle may preferably be molybdenum disulphide. Preferably, such coating material may be in the form of micronized powder, that is having a particle size in the order of microns.

During the molykote treatment cycle, the process temperature may be maintained between 15°C and 35°C.

The amount of coating material may vary between 15 and 25 grams depending on the number of bodies **2'** present in the rotary barrel.

Preferably, the coating material may be in an amount ranging from 0.0002 to 0.00035 g/cm2 of the surface to be treated.

For example, should there be treated 200-250 bodies **2'** with about 18g of powder there is obtained 0.00025g/cm2.

Suitably, the coating material may be gradually inserted during the molykote treatment cycle. For example, the coating material the coating material may be added with a plurality of separate injections, for example by means of 2, 3 or 4 separate injections.

In this manner, by gradually adding the coating material, there may be obtained an even distribution of molybdenum disulphide on all bodies, reducing the risk of caking of the coating.

For example, should there be treated 200-250 bodies **2'** with about 18g of powder, the latter may be added with three injections of about 6g each.

Table 1 below shows that the module **2** which comprises the anti-friction layer **9** has a coefficient of friction of the outer surface **9'** that is much lower than the coefficient of friction of the outer surface of a module without such layer **9.**

The tests were carried out according to the UNI ISO 15113:2005 standard and under the conditions of 23 +/-2 °C, R.U. 50+/-10%. Such test provides for the sliding of a slider with regulated weight on a horizontal plate, driven by a pulley actuated with a dynamometer.

The horizontal plate on which the slider slides is coated with a rubber plaque. Such material is the one normally used in the tyres of the motorcycle.

The slider is coated with the samples (A) and (B).
(A): vulcanised butyl rubber sample not treated on the surface, which is the material of the body **2'** only.
(B): vulcanised butyl rubber sample with molykote surface treatment of molybdenum disulphide, that is the material of the module **2** which comprises the coating **9.**

**TAB. 1**

| | (A) | (B) |
|---|---|---|
| static coefficient of friction | 5.0 | 1.2 |
| dynamic coefficient of friction | 2.1 | 1.2 |

As shown in the table above, the module **2** with the layer **9** has a particularly low surface coefficient of friction.

In particular, the static coefficient of friction of the sample (B) is significantly smaller than that the sample (A). Thanks to this characteristic, the insertion and the removal of the module **2** into/from the tyre may be particularly easy.

According to a different embodiment of the invention, the treatment for providing the layer **9** may be a silicone coating treatment.

Also in this case, the treatment material and the bodies **2'** may be positioned in a container. The bodies **2'** may therefore be moved in the container with the silicone material so that the long contact time between the material and the bodies **2'** together with the continuous impact between the bodies **2'** promote an even distribution of the silicone material. In this manner, despite the porous surface, there may be formed a continuous layer which may define the anti-friction **9'** layer.

Such treatment may provide for the use of a rotary barrel which may be filled with a load consisting of about 40 - 200 bodies **2'** depending on the size thereof and the volume of the machine used.

This may allow to ensure an optimal movement of the bodies **2'** to allow an even distribution and cross-linking of the coating.

The duration of the silicone coating cycle may vary between 15 and 25 minutes, depending on the number of bodies **2'** present in the rotary barrel.

Should there be used a number of bodies **2**' greater than 400, the silicone coating cycle may have a greater duration, for example 30-40 minutes, to ensure an even application of the coating.

The coating material used in the silicone coating cycle may preferably be silicone in liquid form, which may adhere to the surfaces of the bodies by cross-linking.

In order to facilitate such process and in particular the cross-linking, the process temperature during the silicone coating cycle may be maintained between 40°C and 80°C.

The amount of coating material may vary depending on the number of bodies **2'** present in the rotary barrel.

Suitably, the coating material may be gradually inserted during the silicone coating cycle.

In this manner, by gradually adding the coating material, there may be obtained an even distribution of silicone on all bodies, ensuring the correct cross-linking.

The modules **2** may be shaped differently and/or they may vary numerically depending on the preferences.

Preferably, the module **2** may have an area **3** designed to come into contact with the adjacent modules, and an area **4** interposed between the end areas **3** designed to come into contact with the tyre and the rim.

Suitably, the layer **9** may extend throughout the surface of the body **2'** for fully coating the body **2'.** The outer surface **9'** of the module **2** may comprise the outer surface **3'** of the areas **3** and the outer surface **5** of the area **4.** Preferably, the outer surface **3'** of the areas **3** and the outer surface **5** of the area **4** may cooperate to define the surface **9'.**

The module **2** may have the lateral surface **5** designed in use to be at least partially directly in contact with the tyre and/or with the rim of the wheel onto which the latter is fitted.

The outer surface **5** may have low friction. Advantageously, there may be facilitated the insertion of the modules **2** into the tyre and at the same time, when using the filling element **1,** this may allow to avoid the continuous rubbing between the modules **2** and the tyre and/or prevent the rim from generating heat which jeopardises the duration and performance of the filling element.

In greater detail, the lateral surface **5** may have a portion **6** designed to come into contact with the tyre. The lateral surface **5** may have a portion **7** designed to come into contact with the rim of the wheel.

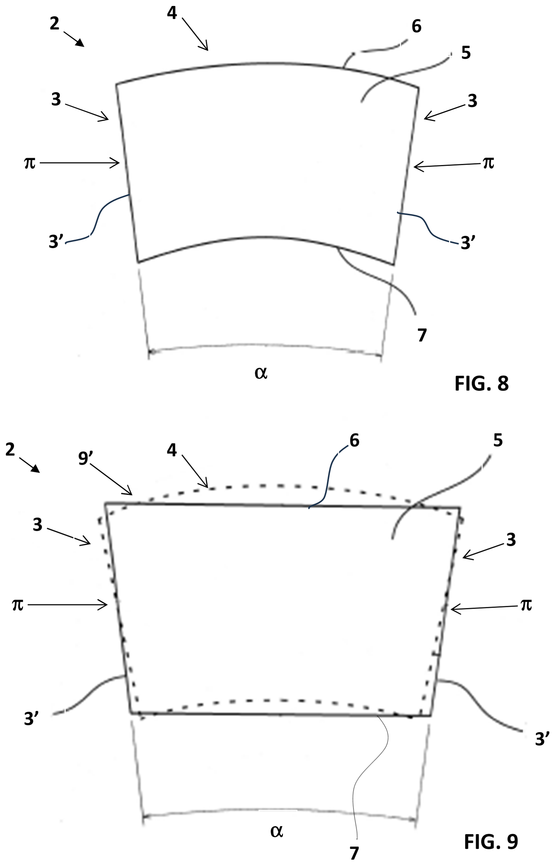

According to an embodiment, the module **2** may have a circular section shape, for example as shown in FIG. 8, ellipse-shaped, for example as shown in FIGS. 1 - 7, with end areas **3** preferably flat or slightly dome-shaped designed, as mentioned above, to remain in contact with the corresponding end areas **3** of the adjacent modules once inserted into the tyre to obtain the annular modular assembly **1.**

Advantageously, the end areas **3** may have a circular or elliptical cross-section, so as to adhere to the corresponding end areas **3** of the adjacent modules **2** excellently.

Suitably, the outer surface **3'** may therefore come into direct contact with the outer surface **3'** of the area **3** of an adjacent module.

The outer surface **9'** may comprise the surfaces **3'.** In this manner, also the surface **3'** at the area **3** may have low friction. This may also allow to prevent the movement between two adjacent modules **2** from generating heating while maintaining the same advantages highlighted above.

According to a preferred embodiment, the end areas **3** may be substantially planar. The areas **3** may define respective planes **π** which are incident with respect to each other and angularly spaced apart by an angle **α** comprised between 8° and 30°, preferably comprised between 10° and 25°, and even more preferably comprised between 12° and 22°.

The planes **π** may pass through the axis **X** defining the wheel axis.

In other words, the areas **3** may include or consist of a planar surface **3'.**

Thanks to this characteristic, the number of modules **2** for covering the entire circumferential extension of the annular modular assembly **1** may be sufficiently high to allow the user to customise the elastic response of the tyre whenever required.

The number of modules **2** sufficient to cover the entire circumferential extension of the tyre will vary depending on the measurement of the latter, without prejudice to the angular extension indicated above. Furthermore, the number and the size of modules may vary depending on whether the modules are designed to fill the front or rear wheel.

Furthermore, the compressibility of the expanded elastomeric material will allow to insert into the tyre a number of modules **2** greater than those required to cover the whole circumferential extension of the annular modular assembly **1.**

This will allow to stiffen the tyre, given that the modules **2** therein are pre-loaded. On the other hand, the use of a number of modules **2** smaller than those required to cover the whole circumferential extension of the annular modular assembly **1** will make the response of the tyre to the stress more comfortable for the rider.

Therefore, a kit for filling a given tyre may include a packaging and a number of modules **2** preferably greater than the one required to cover the whole circumferential extension of the tyre.

This allows a user to customise to the maximum the elastic response of the tyre, given that there may be inserted a number of modules that is larger or smaller than those required to cover the whole circumferential extension of the tyre.

By way of non-limiting example, if for example to cover the whole circumferential extension of an 18" front motorcycle tyre there are required 24 circular section-shaped modules (FIG. 8) measuring 15° each, the kit may contain 25, 26 or more modules.

By way of example, each module **2** may weigh 25 gr - 40 gr, a length of the outer chord measuring 70 mm - 90 mm and a diameter measuring 60 mm - 80 mm.

On the other hand, if for example to cover the whole circumferential extension of a rear tyre of a motorcycle there are required 20 modules measuring 18° each, the kit may contain 21, 22 or more modules.

Furthermore, still by way of example of example, each module **2** may weigh 60 gr - 90 gr, a length of the outer chord measuring 80 mm - 100 mm and a diameter measuring 80 mm - 120 mm.

Given that the layer **9** is particularly small, in the order of micrometres, the body **2'** may substantially have the same size and weight as the module **2.**

The compressibility of the material may be different for the modules **2** designed for the rear or front wheel.

Suitably, there may be provided for an assembly comprising the tyre of a cycle or motorcycle designed to be fitted on the rim of a wheel and an annular modular filling element which can be **1** positioned inside of the tyre.

The annular modular filling element **1** may consist of a plurality of identical modules **2** with the low friction surface **9'** so as to avoid the use of anti-friction elements such as lubricants or talc or sleeves with the advantages described above.

In particular, the outer surface **9'** of the modules **2** may be directly in contact with the adjacent modules and with the tyre.

For example, should the comprise opposite areas **3** and the intermediate area **4,** the respective outer surfaces **3'** may be directly in contact with the outer surface of an adjacent module and the outer surface **5** may be directly in contact with the tyre.

The assembly may therefore be without anti-friction elements such as lubricant gels or sleeves interposed between the outer surface **9'** of each module **2** and the tyre and without anti-friction elements such as lubricant gels or talc or sleeves interposed between the outer surface **9'** of each module **2** and an adjacent module, with the advantages described above.

The assembly may also comprise a rim. In this case, the assembly may define a wheel of a cycle or motorcycle with rim, the filling element **1** and tyre.

Possibly, the outer surface **5** of the area **4** may comprise a portion **6** directly in contact with the tyre and a portion **7** directly in contact with the rim.

An example of a module **2** whose geometric shape has planar-shaped end areas **3** has been described above. Such geometric shape has advantages in terms of performance and filling as described above.

However, the module **2** may be shaped differently. As a matter of fact, the module **2** with the layer **9** may equally have an outer surface **9**' with a low friction which allows to obtain the advantages described above irrespective of the geometric shape of the module **2.**

In particular, the outer surface **9'** of the module **2** may equally comprise one or more portions **3'** directly in contact with the adjacent modules, and/or one or more portions **5** directly in contact with the tyre and/or the rim.

For example, as shown in FIG. 9, the modules **2** may have an elongated cylindrical or ellipsoidal shape. As a matter of fact, thanks to the elasticity of the expanded elastomeric material, they may take the circular or ellipsoidal section shape, that is take a curved shape, once inserted into the tyre and elastically forced thereinto, as schematically shown in FIG. 9 where the solid line indicates the shape that the module **2** takes in the absence of stresses and the dashed line shows the shape that the module **2** takes when elastically forced into the tyre.

Although such configuration has a pair of end areas **3** with the respective surface **3'** with low friction and an interposed area **4** with the relative surface **5** with low friction.

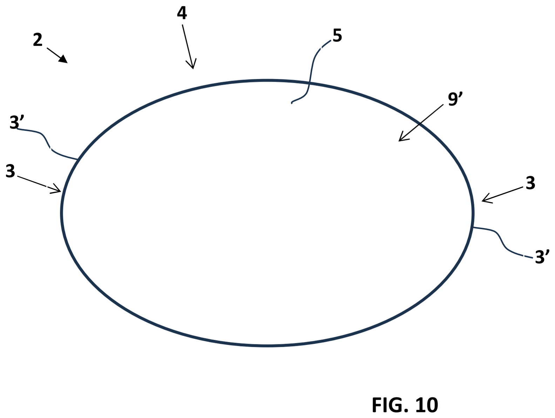

Another possible geometric shape is the oval one, for example as shown in FIG. 10. Also, an oval module **2** may have the outer surface **9'** designed to directly come into contact with the tyre, the rim and/or adjacent modules.

In this case, the outer surface **9'** of the module **2** may equally comprise in use a pair of areas **3** whose surface **3'** in use is directly in contact with an adjacent module and an area **4** interposed between the areas **3** whose surface **5** in use is directly in contact with the tyre and/or the rim.

In the light of the above, it is clear that the invention attains the pre-set objectives.

The present invention may include various parts and/or similar or identical elements. Unless otherwise specified, similar or identical parts and/or elements will be indicated using a single reference number, it being clear that the described technical characteristics are common to all similar or identical parts and/or elements.

The invention is susceptible to numerous modifications and variants, all falling within the scope of protection of the attached claims. All details can be replaced by other technically equivalent elements, and the materials can be different depending on the needs, without departing from the scope of protection of the invention defined by the attached claims.

## Claims

1. A module **(2)** which can be used with a plurality of other modules to obtain an annular modular filling element **(1)** adapted to fill a tyre of a cycle or motorcycle, the tyre being designed to be fitted on the rim of a wheel, the module **(2)** being removably insertable into the tyre,
wherein the module **(2)** has an outer surface **(9')** designed to directly come into contact with the tyre or other modules;
wherein the module comprises a body **(2')** and a layer **(9)** for the surface coating of said body **(2'),** said surface coating layer **(9)** comprising said outer surface **(9');**
and wherein said surface coating layer **(9)** is an anti-friction layer.

2. Module according to claim 1 wherein said body **(2')** is made of expanded elastomeric material which comprises from 30% to 70% by weight of butyl rubber.

3. Module according to claim 1 or 2, wherein said surface coating layer **(9)** consists of molybdenum disulphide.

4. Module according to the preceding claim, wherein the surface static coefficient of friction of said outer surface **(9')** determined according to the UNI ISO 15113:2005 standard is lower than 2.

5. An assembly comprising:
- a tyre of a cycle or motorcycle designed to be fitted on the rim of a wheel;
- an annular modular filling element **(1)** which can be positioned in said tyre;
wherein said annular modular filling element **(1)** consists of a plurality of identical modules **(2)** according to any one of the preceding claims so as to avoid the use of anti-friction elements such as lubricants or talc or sleeves.

6. Assembly according to the preceding claim wherein said outer surface **(9')** of said modules **(2)** of said annular modular filling element **(1)** is directly in contact with the adjacent modules and with said tyre.

7. Assembly according to claim 6, wherein each of said modules **(2)** comprises a pair of opposite end areas **(3)** and an intermediate area **(4)** interposed between said opposite end areas **(3),** said pair of areas **(3)** comprising an outer surface **(3')** directly in contact with the outer surface of an adjacent module, said intermediate area **(4)** comprising an outer surface (5) directly in contact with said tyre.

8. Assembly according to claim 6 or 7, without anti-friction elements such as lubricant gels or talc or sleeves interposed between said outer surface **(9')** and said tyre and without anti-friction elements such as lubricant gels or talc or sleeves interposed between said outer surface **(9')** and an adjacent module.

9. Assembly according to claim 7 or 8 further comprising a rim, said tyre being arranged on said rim, said plurality of modules **(2)** being interposed between said rim and said tyre, said outer surface **(5)** of said area **(4)** of said modules **(2)** comprising a first portion **(6)** directly in contact with said tyre and a second portion **(7)** directly in contact with said rim.

10. A method for providing a plurality of modules **(2)** for obtaining an annular modular filling element **(1)** adapted to fill a tyre of a cycle or motorcycle, the tyre being designed to be fitted on the rim of a wheel, the modules **(2)** having an outer surface **(9')** designed to come into contact with the tyre and other modules once inserted into the tyre;
the method comprising the steps of:
- providing a plurality of bodies **(2')** made of expanded elastomeric material;
- treatment of said bodies **(2')** to obtain an anti-friction surface coating layer (9) on each one of them, said anti-friction surface coating layer **(9)** comprising said outer surface **(9').**

11. Method according to the preceding claim, wherein said treatment is a molykote treatment obtained with molybdenum disulphide.

12. Method according to the preceding claim, wherein said molykote treatment is obtained using molybdenum disulphide n an amount comprised between 0.0002 g and 0.00035 g per cm² of total surface of said plurality of bodies **(2')** to be treated.

13. Method according to the preceding claim, wherein said expanded elastomeric material of said bodies **(2')** comprises from 30% to 70% by weight of butyl rubber.

14. Method according to the preceding claim, wherein the surface static coefficient of friction of said outer surface **(9')** of said modules **(2)** determined according to the UNI ISO 15113:2005 standard is lower than 2.
